# EUROPEAN PATENT SPECIFICATION

(11) **EP 3 677 844 B1**
(45) Date of publication and mention of the grant of the patent: **21.06.2023**
(21) Application number: 19219839.8
(22) Date of filing: 27.12.2019
(51) Int. Cl.: B01D 45/06, B01D 45/16, F24C 15/20

(54) **KITCHEN HOOD FILTER**
ABZUGSHAUBENFILTER
FILTRE DE HOTTE DE CUISINE

(30) Priority: 04.01.2019 PL 12794319 U
(43) Date of publication of application: 08.07.2020
(60) Divisional application: 21209786.9
(73) Proprietor: Stalgast Radom Sp. z o.o., 03-736 Warsaw (PL)
(72) Inventor: FROM, Konrad, 02-942 Warsaw (PL)
(74) Representative: Piotrowicz, Alicja

(56) References cited:
- EP-A1- 0 206 204
- EP-A1- 2 363 190
- WO-A1-2007/096731
- WO-A2-01/37972
- WO-A2-03/015895
- US-A- 3 945 812
- US-A1- 2015 328 566

## Description

The subject-matter of this invention is a kitchen hood filter designed to evacuate and purify air and to filter solid and liquidparticles from air.

The solutions known to date include modular chamber filters with centrifugal air movement made of metal profiles arranged in one plane.

The US patent description number US4872892 entitled "Air purifier" discloses a modular solution which comprises plurality of modules operating according to centrifugal separation, each module comprising at least one vortex chamber. Gas entering the vortex chamber is set into helical motion therewithin, so that the gas flows through the vortex chamber in one direction, substantially perpendicular to a direction in which the incoming gas is introduced into the module.

Another US patent description number US20070023349 entitled "High efficiency grease filter cartridge" discloses a solution which has a filtering section configured so that fumes enter a main chamber thereof and flow through a grease removing filter therewithin in a direction parallel to the main chamber.

Yet another, international patent description number WO2006074425 discloses a device for improving performance while retaining the benefits of displacement ventilation without the use of independent air conditioning systems.

Significant for the subject solution is an earlier utility model application number W.127740 relating to a kitchen hood filter that also has a series of longitudinal chambers with a quadrilateral profile, and a meandering air flow. Each of the filter chambers has a slotted intake channel formed between the side wall and a side surface of a blade parallel to it. The blade is a longitudinal slat which is angled at an intake opening of the slotted intake channel, thereby expanding the said opening. Opposite to the slotted intake channel, in each chamber an outlet slotted channel is formed between the side wall and a side surface of a blade parallel to it. The blade is a longitudinal slat which is angled ata certain distance from an outlet opening of the slotted outlet channel, thereby expanding said slotted outlet channel inside the chamber. The two side walls are fitted with handles facing in opposite directions.

A significant document illustrating the state of the art in hood filters is the US invention US2015/328566. The solution presents a kitchen hood filter with a series of longitudinal chambers and a meandering air flow, with mounted handles facing in opposite directions, wherein each chamber has an intake slotted duct formed between the side wall of the slat and the side surface of the slat parallel thereto, wherein in each chamber, opposite the intake slotted duct, an outlet slotted duct is formed between the side wall and the side surface of the slat parallel thereto. Each slat is longitudinal and is angled at the intake opening of the intake slotted duct, thereby expanding the said opening.

In turn, from the specification of the European invention EP2363190A1, there is known a kitchen hood filter comprising a housing inside which there are mounted a number of profiles that form chambers, through which the air flows, wherein the individual profiles have members that are bent to form elongated areas of air flow, wherein the arms of the individual profiles form at least two circulation chambers and, in the direction of air intake and air outlet, the arms of the individual profiles form an intake slotted duct and an outlet slotted duct, wherein the arms in the outlet slotted duct form a labyrinthine passage.

From yet another international solution WO03015895A2, a gas filter is known, the internal structure of which is an assembly of overlapping elongated stepped baffles with slat-like protrusions. The baffles are arranged in series next to each other and mounted in the frame to prevent the gas flow in a straight line.

In turn, the international invention WO2007096731A1 discloses a filter comprising two arrays of profiled longitudinal intermediate slats and a micro-stretched filter placed between said series of intermediate slats. The slats have a U-shape cross-section and are arranged opposite to each other, so that their edges form air flow ducts.

On the other hand, from the European invention EP0206204 a fluid separator is known, having first and second section parts arranged in rows. The parts are open in cross section and are trough-shaped with overlapping edges. Each part of the section has an internal protrusion extending in its longitudinal direction, wherein the protrusion causes increased turbulence and hence cleaning of fluids flowing through the parts of the section. The cross-sectional parts can be detachably retained in the handle to allow for easy cleaning.

From the international solution WO0137972A2, however, a modular filter device for exhaust and/or filtering hoods is known, which forms a suction chamber with the inside of the hood, the labyrinthine ducts of which have a zigzag shape.

Worth noting is the American document US3945812A, the solution of which is based on a series of baffles for directing the exhaust stream along a tortuous path as it passes through the filter, thus removing condensed grease and oils, depositing them on the inner surfaces of the filter by means of a centrifugal force and a ram action.

In general, the state of the art reveals some solutions that employ filters with labyrinthine profile to purify air from cooking fumes. Air filtration in a labyrinth filter uses a labyrinthine shape in order to slow down the air flow almost to zero and to change the direction of the flow. Heavier particles deposit on the filter walls. In case of this type of filter, it is also not possible to increase the flow rate without further consequences. In order to operate at the filter maximum efficiency, at a high fluid flow rate one has to increase the time during which the particles are subjected to external forces. Such type of devices is made of stainless steel, which allows a long lifetime and easy maintenance. They are mainly used to filter out greasy fumes, oil mist. However, with such devices, the degree of filtration was not sufficient.

Another type of air purification kitchens filters are devices that use a cyclone effect, which is a centrifugal force based filtration. Air/liquid particles are set in rotational motion and subjected to the centrifugal force. Heavier particles present in the air (suspension) deposit on the chamber walls. Theoretically, the higher the velocity, the higher the centrifugal force and the more efficient the filtration. Unfortunately, the increase of the velocity causes some physical phenomena associated with the high flow, which adversely affects the filtration and other aspects related to air flow (e.g. noise).

Yet another type of filters used in kitchen ventilation, and not only, are labyrinth filters. This type of filter is less efficient than a combination of a cyclone filter and a labyrinth filter.

On the market there are also present mesh filters, which can be used together with labyrinth or cyclone filters. Mesh filters capturing grease are a major fire hazard. An unclean mesh filter burns like a torch when ignited and is very difficult to extinguish. Some countries have banned the use of such filters in professional restaurants and catering services.

Filter used according to state of the art do not provide a sufficient degree of filtration of the purified air, so the fraction of the unfiltered air with grease particles remains in the filtered room. In air filtration devices, especially in the field of kitchen equipment, it is a crucial issue to eliminate solid particles and liquid particles containing grease particles from air. In order to meet the expectations of the users, the Applicants have set for themselves the task of developing such filter which would have a construction allowing a higher efficiency than the known solutions.

The aim of the solution according to the present invention is to develop a new construction of a high performance kitchen hood filter for kitchen ventilation systems for restaurants and catering services.

The term "blade" used in the description refers to an "arm" of a profile and has the same designation in the drawings. The term "slat" means an element of which individual profiles are made out.

According to the present invention, a kitchen hood filter comprises a housing, inside which a number of profiles that form chambers are mounted, through which the air flows, wherein the individual profiles have arms that are bent such that they form elongated areas of air flow. The arms of the individual profiles form two circulation chambers in which the flowing air containing grease particles is subjected to centrifugal force. In the direction of air intake and air outlet, the arms of the individual profiles form an intake slotted duct and an outlet slotted duct. The arms in the outlet slotted duct form a labyrinthine passage changing the direction of the air flow and slowing down the air flow.

Preferably, the individual profiles are positioned to form the intake slotted duct and the outlet slotted duct therebetween. The profiles placed in the kitchen hood filter have different shapes.

One longer profile is an element shaped to resemble a rotated "S" letter which first arm is a side of the intake slotted duct, and the inner surface of the opposite second arm, which is located below and distanced from the inner surface of the first arm of the other profile, forms a first circulation chamber. A second circulation chamber is formed between the outer surface of the second arm of the S-shaped profile and the surface of the first arm of the other profile and between the middle surface of the other profile. The arms of the S-shaped profile are inclined to the vertical at an angle from 45° to 130°.

Other shorter profile is an element having a shape resembling a "U" letter with the arms having different lengths and outwardly bent ends. The bent ends of the U-shaped profile are inclined to the vertical at an angle from 30° to 130°. The bent end of the longer arm of the U-shaped profile and the bent end of the shorter arm of the other U-shaped profile form an indirect labyrinthine slotted air outlet duct.

The U-shaped profile is connected to the outer surface of the profile that is shaped to resemble a rotated "S" letter. The mid-section of the profile that is shaped to resemble a rotated "S" letter forms the other side of the slotted air intake duct.

Preferably, the kitchen hood filter is made of stainless steel.

Due to its design and features, the kitchen hood filter according to the invention is applicable in professional kitchen hoods.

The kitchen hood filter according to the invention provides an effective removal of kitchen fumes and an effective separation of grease present in kitchens and restaurants.

The subject-matter of the invention is disclosed in the attached drawing which presents:

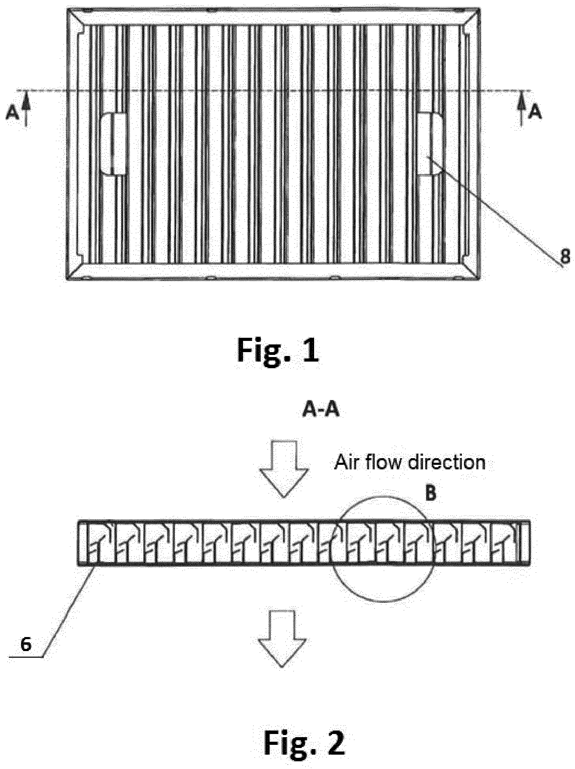

Fig. 1 a view from below of a first embodiment of the kitchen hood filter,
Fig. 2 cross-profile A-A of Fig. 1 of the first embodiment of the kitchen hood filter,

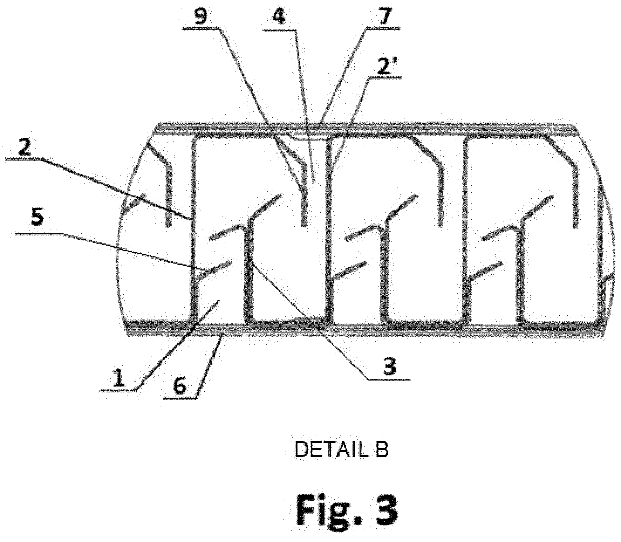

Fig. 3 detail B of Fig. 2 of the first embodiment of the kitchen hood filter,

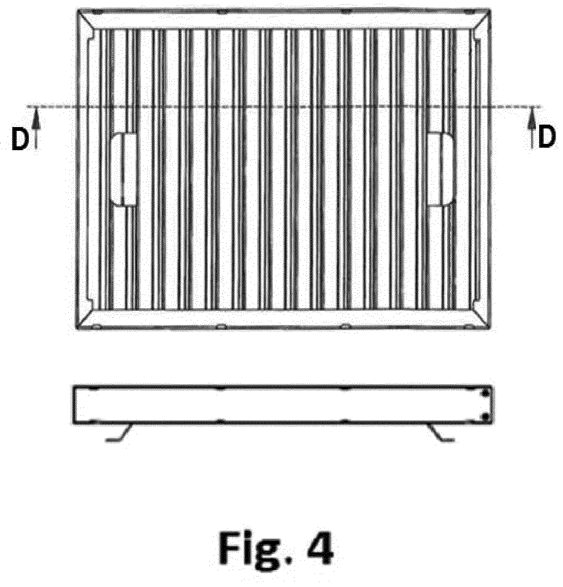

Fig. 4. a view from below of a second embodiment of the kitchen hood filter,

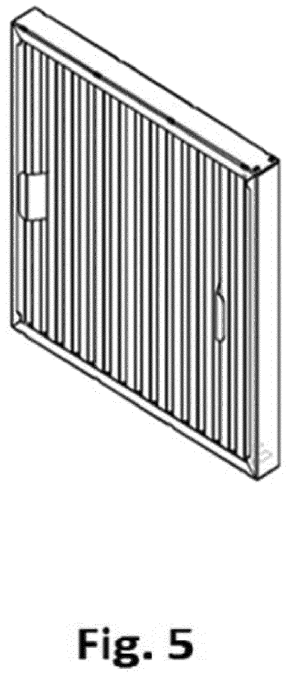

Fig. 5 a perspective view of the second embodiment of the kitchen hood filter,
Fig. 6 a schematic view in cross-profile of the kitchen hood filter showing the shapes of the individual profiles,
Fig. 7 detail C of Fig. 6 of the second embodiment of the kitchen hood filter,
Fig. 8 a perspective view of a professional kitchen hood comprising the kitchen hood filter according to the invention,
Fig. 9 a perspective view of another projection of a professional kitchen exhaust hood comprising the kitchen hood filter according to the invention,
Fig. 10 a diagram showing the degree of filtration in percentages as a function of particle size of the solution from the state of the art as compared with the solution according to the present invention.

Reducing the amount of grease particles in the kitchen air improves both hygienic conditions and fire safety in kitchens.

The Applicants have made a comparison of their solution with one of the existing market solutions of the Halton company . The test was conducted in the laboratory of DMT GmbH & Co. KG in Essen in accordance with German VDI2052-1 regulations.

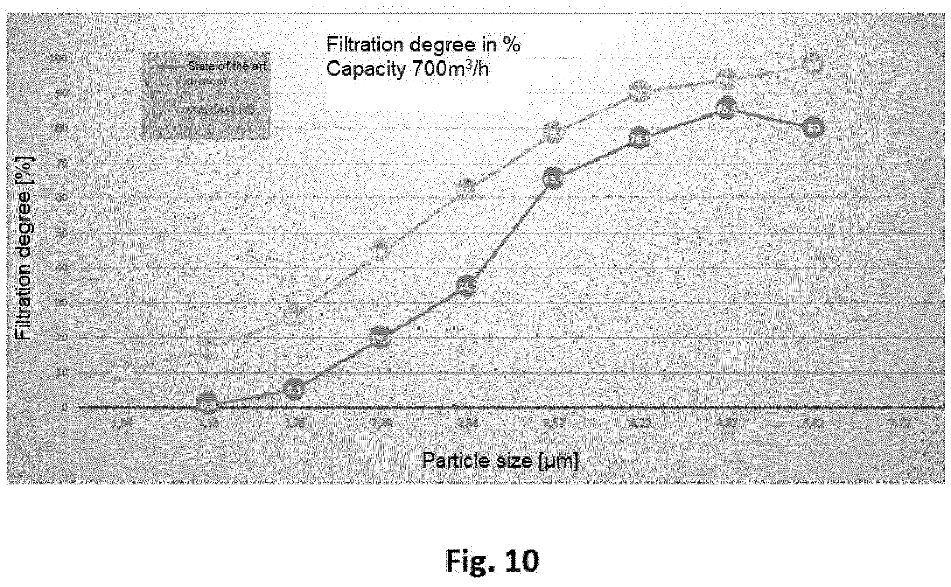

The results of the conducted analysis were presented in the attached Fig.10. The tests confirmed higher effectiveness of the solution according to the present invention in relation to the prior art filter. It results from the above that the shape of the kitchen hood filter according to the invention led to achieve air purification in kitchens close to 98°/ degree of filtration. This result was obtained for particles up to 10 µm at an air flow rate of 700 m³/ h for a 500mm × 500mm filter. As it can be seen in the schematic diagram presenting data for the whole particle size range, the filtration degree obtained by using the Applicants' solution is higher and reaches up to 98% for particle size of about 5.62 µm.

The combination of air filtration using of labyrinth filter elements and filtration using the centrifugal effect on a small area resulted in very high air filtration efficiency on a relatively small area.

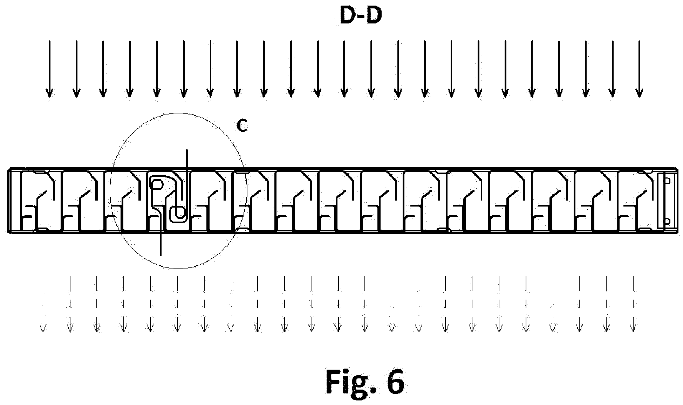

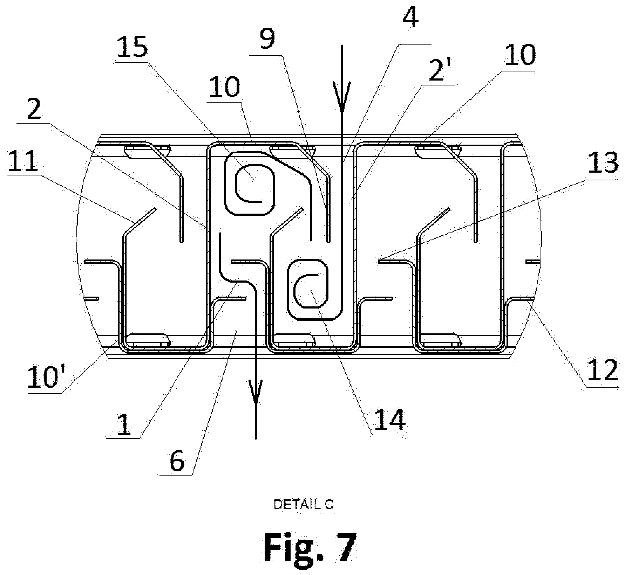

In one embodiment presented in Figs. 6 and 7, the kitchen hood filter is made entirely of stainless steel, which allows to wash and disinfect it with chemical agents. In this embodiment, the individual profiles 10, 10' are arranged in a row, formed by overlapping, one after the other, shaped profiles of different shapes. As shown in Fig. 7, one longer profile 10 is an element resembling a rotated "S" letter, which first arm 9 forms one side of an intake slotted air duct 4, and the inner surface of the opposite second arm 11 of the element resembling a rotated "S" letter inclined to the vertical at a 45° angle towards the inner surface of the first arm 9, which is situated below and distanced from the inner surface of the first arm 9 of the other profile 10, forming the first circulation chamber 14. Inside this chamber, the air inflow is subjected to centrifugal force so that each particle is set in a rotational motion. The heavier particles suspended in the air stream, deposit on the chamber walls. A clearance formed between the end of the arm 11 and the inner surface of the arm 9 directs the flow from the first circulation chamber 14 to the second circulation chamber 15. The clearance is 5 mm wide. The second circulation chamber 15 is formed of the outer surface of the second arm 11 of the element resembling a rotated "S" letter, the middle surface 2 and the upper surface of the profile 10 resembling a rotated "S" letter, and is limited from below by the bent end 13 of the second shorter profile 10' having a shape resembling "U" letter with the arms having different lengths and outwardly bent ends. Due to different heights of the arms of the second shorter profile 10', bent ends 12, 13 of two adjacent shorter profiles 10' form an elongated indirect labyrinthine slotted air outlet duct 1. In this preferable embodiment, bent ends 12, 13 of two adjacent shorter profiles 10' are bent at a 90° angle. In other embodiments, bent ends 12, 13 can be arranged at a different angle. In another embodiment, the ends are arranged at a slant and are parallel to each other.

In order to brace and strengthen the construction of the kitchen hood filter, profile 10' resembling a "U" letter is connected to the outer surface of profile 10 that resembles a rotated "S" letter "S". The profiles arranged in a line are embedded inside the housing.

In a different embodiment not being in the scope of the claims, the kitchen hood filter is made out of a series of longitudinal chambers with a quadrilateral profile and a meandering air flow, with mounted handles 8 facing in opposite directions. Each of the chambers has an intake slotted duct4formed between a side wall 2' and the side surface of the blade 9 parallel to it. The blade 9 is a longitudinal slat, which is angled at an intake opening 7 of the intake slotted duct 4, expanding the said opening 7. Opposite to the intake slotted duct 4, in each chamber, there is an outlet slotted duct 1 formed between a side wall 2 and the side surface of a blade 3 parallel to it. The blade 3 is a slanted T-bar inclining towards an outlet opening 6 of the slotted duct 1 and towards an angularly bent offset slat 5 located in the side wall 2. The slant of the T-bar ranges from 65° to 130° and is consistent with the angular bend of the offset slat 5. In this embodiment, due to the differences in bending of the arms of the individual profiles, they are denoted with different reference numbers.

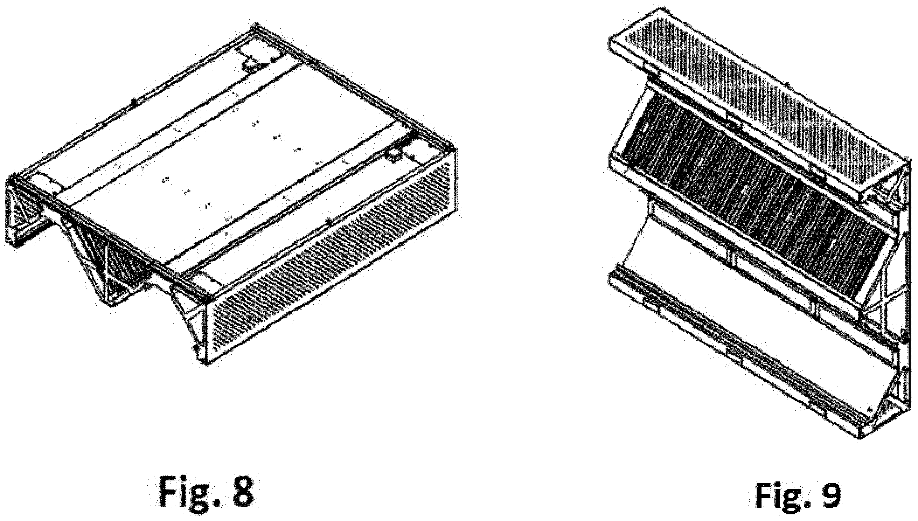

As shown in Figs. 8 and 9, the kitchen hood filter is used in professional kitchen hoods.

Different sizes of the embodiments of the invention may be available on the market depending on the size and purpose of the kitchen hood. Preferably, the sizes of the filters are 400 mm × 330 mm, 500 mm × 500 mm and their height is 50 mm. The filters are used in hoods where they are arranged in a line one after another, thus creating a surface filtering the air. The filters according to the invention can be placed in a hood mounted centrally in a kitchen and can be placed in a wall hood in such room. In both cases, the present solution meets filtration requirements for restaurant kitchens by purifying the air from grease particles whirling in the room.

The solutions developed by the Applicant meet the strict requirements for the equipment used in professional food catering and restaurants. They provide a high degree of filtration, high-efficiency of over 95% and fire resistance that blocks the passage of a flame through the filter. Under extreme conditions, thanks to its construction, the filter will prevent fire from penetrating into the ventilation system in the building.

Filters reduce grease build-up on the walls of ventilation ducts. The grease deposited in ventilation ducts may be a cause of fire. Cleaning the ducts is time-consuming and labour-intensive. Highly efficient filters allow to use heat exchangers in ventilation systems. However, heat exchangers are very sensitive to polluted air, they get unclean, and therefore their efficiency drops quickly. Using efficient filters allows to install a filtering system based on UV lamps (UV-C) in hoods. UV-C light filtration purifies the air from kitchen odours and fumes. Air being filtered with UV-C light should be purified from of at least 95% of residues. Due to the high-efficiency of the filtration, there is no need for repeated cleaning of the UV filtration system and ventilation ducts.

## Claims

1. A kitchen hood filter, comprising a housing, inside which a number of profiles that form chambers through which the air flows are mounted, wherein the individual profiles (10, 10') have arms (9, 11, 12, 13) that are bent to form elongated areas of air flow, wherein the arms (9, 11, 12, 13) of the individual profiles (10, 10') form at least two circulation chambers (14, 15), and wherein in the direction of air intake and air outlet, the arms (9, 11, 12, 13) of the individual profiles (10, 10') form an intake slotted duct (4) and an outlet slotted duct (1), wherein the arms (9, 11, 12, 13) in the outlet slotted duct (1) form a labyrinthine passage, **characterized in that** the profiles (10, 10') have different shapes, of which one longer profile (10) is an element resembling a rotated "S" letter, which first arm (9) is a side of the intake slotted duct (4) and the inner surface of the opposite second arm (11), located below and distanced from the inner surface of the first arm (9) of the other profile (10), forms a first circulation chamber (14), and between the outer surface of the second arm (11) of the S-shaped profile (10) and the first end of the arm (9) of the other profile (10) and between the middle surface (2) of the other profile (10), the second circulation chamber (15) is formed, and the second shorter profile (10') is an element resembling the "U" letter with arms of different length and outwardly bent ends (12,13).

2. A filter according to claim 1, **characterized in that** the profiles (10, 10') are positioned to form the intake slotted duct (4) and the outlet slotted duct (1) therebetween.

3. A filter according to claim 1, **characterized in that** the bent ends (12, 13) of the profile (10') resembling the "U" letter, are inclined to the vertical at an angle ranging from 30 to 130 degrees and the arms (9, 11) of the S-shaped profile are inclined to the vertical at an angle of 45 to 130 degrees.

4. A filter according to claim 1, **characterized in that** the bent ends (13) of the longer arm of the profile (10') resembling the "U" letter and the bent ends (12) of the shorter arm of the other profile (10') resembling the "U" letter form an indirect labyrinthine slotted air outlet duct (1).

5. A filter according to claim 1, **characterized in that** the profile (10') resembling the "U" letter is connected to the outer surface of the profile (10) resembling the "S" letter.

6. A filter according to claim 1, **characterized in that** the middle surface (2) of the profile (10) resembling the "S" letter forms the other side of the slotted air intake duct (4).

7. A filter according to claim 1, **characterized in that** it is made of stainlesssteel.

8. The use of the filter specified in the claims 1- 7 in professional kitchen hoods.

## Patentansprüche

1. Dunstabzugshaubenfilter, das ein Gehäuse umfassend, in dessen Innerem, mehrere Profile angeordnet sind, die von Luft durchströmte Kammern bilden, wobei die einzelnen Profile (10, 10') Arme (9, 11, 12, 13) aufweisen, die um längliche Luftströmungsbereiche zu bilden gebogen sind, wobei die Arme (9, 11, 12, 13) der einzelnen Profile (10, 10') mindestens zwei Zirkulationskammern (14, 15) bilden, wobei in Richtung von Lufteintritt und Luftaustritt, die Arme (9, 11, 12, 13) der einzelnen Profile (10, 10') einen geschlitzten Eintrittskanal (4) und einen geschlitzten Austrittskanal (1) bilden, und wobei die Arme (9, 11, 12, 13) im geschlitzten Austrittskanal (1) einen labyrinthartigen Durchgang bilden, **dadurch gekennzeichnet, dass** die Profile (10, 10') unterschiedliche Formen aufweisen, von denen ein längeres Profil (10) ein gedrehtes "S"-ähnliches Element ist, wobei der erste Arm (9) eine Seite des geschlitzten Eintrittskanals (4) ist, und die Innenfläche des gegenüberliegenden zweiten Arms (11), der sich unterhalb und beabstandet von der Innenfläche des ersten Arms (9) des anderen Profils (10) befindet, eine erste Zirkulationskammer (14) bildet, und zwischen der Außenfläche des zweiten Arms (11) des "S"-ähnlichen Profils (10) und dem ersten Ende des Arms (9) des anderen Profils (10) und zwischen der Mittelfläche (2) des anderen Profils (10) wird die zweite Zirkulationskammer (15) gebildet, und das zweite kürzere Profil (10') ein "U"-ähnliches Element ist, das unterschiedlich lange Arme und nach außen gebogene Enden (12, 13) aufweist.

2. Filter nach Anspruch 1, **dadurch gekennzeichnet, dass** die Profile (10, 10') so angeordnet sind, dass sie den geschlitzten Eintrittskanal (4) und den geschlitzten Auslasstrittskanal (1) dazwischen bilden.

3. Filter nach Anspruch 1, **dadurch gekennzeichnet, dass** die gebogenen Enden (12, 13) des "U"-ähnlichen Profils (10') in einem Winkel im Bereich von 30 bis 130 Grad zur Vertikalen geneigt sind, und die Arme (9, 11) des "S"-ähnlichen Profils in einem Winkel von 45 bis 130 Grad zur Vertikalen geneigt sind.

4. Filter nach Anspruch 1, **dadurch gekennzeichnet, dass** die gebogenen Enden (13) des längeren Arms des "U"-ähnlichen Profils (10') und die gebogenen Enden (12) des kürzeren Arms des anderen "U"-ähnlichen Profils (10') einen indirekten, labyrinthartigen, geschlitzten Luftaustrittskanal (1) bilden.

5. Filter nach Anspruch 1, **dadurch gekennzeichnet, dass** das "U"-ähnliche Profil (10') mit der Außenfläche des "S"-ähnlichen Profils (10) verbunden ist.

6. Filter nach Anspruch 1, **dadurch gekennzeichnet, dass** die Mittelfläche (2) des "S"-ähnlichen Profils (10) die andere Seite des geschlitzten Lufteintrittskanals (4) bildet.

7. Filter nach Anspruch 1, **dadurch gekennzeichnet, dass** es aus Edelstahl besteht.

8. Verwendung des in den Ansprüchen 1- 7 angegebenen Filters in professionellen Dunstabzugshauben.

## Revendications

1. Filtre pour hotte de cuisine, comprenant un boîtier à l'intérieur duquel sont montés un certain nombre de profils formant des chambres à travers lesquelles circule l'air, dans lequel
les profilés individuels (10, 10') ont
des bras (9, 11, 12, 13) qui sont pliés pour former des zones allongées de circulation d'air, dans lesquelles les bras (9, 11, 12, 13) des profilés individuels (10, 10') forment au moins deux chambres de circulation (14, 15), et dans lesquelles, dans la direction de l'entrée et de la sortie d'air, les bras (9, 11, 12, 13) des profilés individuels (10, 10') forment un conduit à fentes d'entrée (4) et un conduit à fentes de sortie (1) les bras (9, 11, 12, 13) des profilés individuels (10, 10') forment un conduit d'admission à fente (4) et un conduit de sortie à fente (1), dans lequel les bras (9, 11, 12, 13) dans le conduit de sortie à fente (1) forment un passage labyrinthique, **caractérisé par le fait que**
les profils (10, 10') ont des formes différentes,
dont un profil plus long (10) est un élément ressemblant à une lettre "S" tournée, dont le premier bras (9) est un côté du conduit d'admission à fente (4) et la surface intérieure du second bras opposé (11), situé au-dessous et à distance de la surface intérieure du premier bras (9) de l'autre profil (10), forme une première chambre de circulation (14), et entre la surface extérieure du second bras (11) du profil en S (10) et la première extrémité du bras (9) de l'autre profil (10) et entre la surface centrale (2) de l'autre profil (10), la seconde chambre de circulation (15) est formée, et le second profil plus court (10') est un élément ressemblant à la lettre "U" avec des bras de différentes longueurs et des extrémités recourbées vers l'extérieur (12,13).

2. Filtre selon la revendication 1, **caractérisé par le fait que** les profiles (10, 10') sont positionnés de manière à former entre eux un conduit d'admission à fente (4) et un conduit de sortie à fente (1).

3. Filtre selon la revendication 1, **caractérisé par le fait que** les extrémités recourbées (12, 13) du profil (10') ressemblant à la lettre "U" sont inclinées par rapport à la verticale à un angle allant de 30 à 130 degrés et que les bras (9, 11) du profil en forme de S sont inclinés par rapport à la verticale à un angle allant de 45 à 130 degrés.

4. Filtre selon la revendication 1, **caractérisé par le fait que** les extrémités recourbées (13) du bras le plus long du profil (10') ressemblant à la lettre "U" et les extrémités recourbées (12) du bras le plus court de l'autre profil (10') ressemblant à la lettre "U" forment un conduit de sortie d'air indirect à fentes en labyrinthe (1).

5. Filtre selon la revendication 1, **caractérisé par le fait que** le profil (10') ressemblant à la lettre "U" est relié à la surface extérieure du profil (10) ressemblant à la lettre "S".

6. Filtre selon la revendication 1, **caractérisé par le fait que** la surface centrale (2) du profil (10) ressemblant à la lettre "S" forme l'autre côté du conduit d'admission d'air à fentes (4).

7. Filtre selon la revendication 1, **caractérisé en ce qu'il** est en acier inoxydable.

8. Utilisation du filtre spécifié dans les revendications 1 à 7 dans les hottes de cuisine professionnelles.
